# EUROPÄISCHE PATENTANMELDUNG

(11) **EP 0 738 948 A1**
(43) Veröffentlichungstag der Anmeldung: **23.10.1996**
(21) Anmeldenummer: 96105127.3
(22) Anmeldetag: 29.03.1996
(51) Int. Cl.: G06F 1/26, G06F 1/32

(54) **Netzeinschaltvorrichtung für Personal Computer**

(30) Priorität: 31.03.1995 DE 29505614 U
(71) Anmelder: HEINZINGER ELECTRONIC GmbH, D-83026 Rosenheim (DE)
(72) Erfinder:
(74) Vertreter: Heim, Hans-Karl, Dipl.-Ing.

(57) **Zusammenfassung**

Die Erfindung betrifft eine Netzeinschaltvorrichtung für zumindest zeitweise am Versorgungsnetz betriebene Personal Computer mit einem Stromsensor zur Signalisierung des Einschaltzustands eines Monitors und mindestens einem weiteren Sensor zur Signalisierung ankommender Telekommunikationsdaten. Erfindungsgemäß werden die verschiedenen Sensoren durch ein ODER-Gatter verbunden, so daß bei Betätigung an einem der Peripheriegeräte der Personal Computer eingeschaltet wird. Ein Zeitgeber sorgt dafür, daß der Personal Computer zumindest für eine voreingestellte Zeitdauer eingeschaltet bleibt.

## Beschreibung

Die Erfindung betrifft eine Netzeinschaltvorrichtung für zumindest zeitweise am Versorgungsnetz betriebene Personalcomputer gemäß Oberbegriff des Anspruches 1.

Personal Computer bzw. PCs und ähnlichen Systemen werden immer stärker im Bereich der Telekommunikation eingesetzt. Hierzu müssen die Geräte nicht nur in der Lage sein, Nachrichten zu senden, sondern auch Nachrichten 24 Stunden am Tag zu empfangen. Gerade bei permanent oder zeitweilig am Wechselstromnetz betriebenen Geräten ist es häufig unwirtschaftlich, diese während der Zeit der Empfangsbereitschaft im Dauerbetrieb laufen zu lassen. Einerseits ist der Energieverbrauch sehr hoch, andererseits wird die Lebensdauer dieser Geräte erheblich herabgesetzt.

Zwischen den Nachrichtenübertragungen und in den Arbeitspausen am Personal Computer bietet es sich aus Wirtschaftlichkeitsgründen an, das Gerät abzuschalten.

Die zeitgemäßen Ausführungen der sogenannten "Green PCs" versuchen durch verschiedene Hardware- und Softwaremaßnahmen den Energieverbrauch des Personal Computers zu minimieren. Die energiesparendste Lösung bleibt jedoch eine vollständige Abschaltung des Gerätes.

Um das An- und Abschalten des Gerätes zu erleichtern, sollte der Netzschalter für die gesamte Anlage möglichst gut erreichbar sein. Tatsächlich ist in den meisten Netzteilen für Personalcomputer eine Buchse vorgesehen, die in das Netzkabel des Monitors eingesteckt werden kann.
Nun kann der Monitor über den im PC eingebauten Netzschalter geschaltet werden. Dies ist aus ergonomischer Sicht aber sehr ungünstig, da der Personalcomputer häufig unter dem Arbeitstisch und nur schwer erreichbar aufgestellt ist. Bei modernen Monitoren bietet sich eine solche Abschaltung durch den am Monitor angebrachten Netzschalter an, da dieser in der Regel ergonomisch sehr günstig angeordnet ist.

Ein gattungsgemäßes Gerät ist aus dem deutschen Gebrauchsmuster DE 93 10 522 U1 bekannt. Mit diesem Gerät werden zwischen einem Modem und einem PC zwei Datenleitungen und eine Anrufmeldeleitung überwacht. Die verschiedenen Signale werden einer ODER-Verknüpfung zugeführt und davon ausgehend wird der PC beim Empfang von Nachrichten eingeschaltet.
Leider ist hier eine komfortable Ein- und Ausschaltung des Gerätes über den Netzschalter am Monitor nicht möglich.
In den Druckschriften DE 94 02 325 U1 und CH 6 81 262 A5 werden weitere Vorrichtungen zur Überwachung von Telekommunikationsleitungen beschrieben, mit deren Hilfe ein angeschlossener Computer oder ein anderes elektrisches Gerät angeschaltet werden kann.
Eine Vorrichtung zum Ein- und Ausschalten der Stromversorgung eines Druckers zur Energieeinsparung ist aus DE 94 11 510 U1 bekannt. Hier wird der Datenverkehr zwischen Computer und Drucker überwacht und der Drucker entsprechend eingeschaltet.
Aus der DE 29 25 747 B1 ist weiterhin eine Schaltungsanordnung für einen elektronischen Gleichstrom-Telegraphiesender bekannt, der eine Batterie mit mehreren Abgriffen aufweist, wobei jeweils nur ein Abgriff über eine Schaltstufe angeschaltet wird.

Werden PC, Monitor und ein meist vorhandener Drucker zusammen über solche Einschaltvorrichtungen gesteuert, so werden alle diese Geräte auch beim Empfang von Nachrichten eingeschaltet. Dies hat einen zusätzlichen Verschleiß bei Monitoren und auch bei Laserdruckern, insbesondere mit Polygonspiegel, zur Folge.
Zum komfortablen Einschalten von PCs über den Netzschalter und den Monitor, sind ebenfalls Geräte bekannt. Diese erlauben jedoch keine Einschaltung des PCs beim Empfang von Nachrichten.

Der Erfindung liegt die **Aufgabe** zugrunde, eine Netzeinschaltvorrichtung der gattungsgemäßen Art in einfacher, aber zuverlässiger Weise durch die wesentlichen angeschlossenen Einheiten aktivieren zu können.

Diese Aufgabe wird erfindungsgemäß bei einer Netzeinschaltvorrichtung durch die Merkmale des kennzeichnenden Teils des Anspruches 1 gelöst.
Vorteilhafte Weiterbildungen sind in den Unteransprüchen dargelegt.

Eine Netzeinschaltvorrichtung für zumindest zeitweise am Versorgungsnetz betriebene Personal Computer/PC oder ähnliche für Datenverarbeitung und Telekommunikation eingesetzte Geräte, die zumindest einen Steuerstromkreis zum Anschluß des Monitors oder einer vergleichbaren Anzeigeeinheit besitzt, stellt mit Hilfe eines Stromsensors in diesem Steuerstromkreis fest, ob der Monitor ein- oder ausgeschaltet ist. Dies kann mit Hilfe induktiver, kapazitiver oder sonstiger, die Stromaufnahme des Monitors ermittelnder Sensoren sein. Besonders zweckmäßig ist hier der Einsatz eines Stromübertragers.

Da moderne Monitore einen weiten Bereich der Stromaufnahme haben, von Vollast bis Standby, muß dieser Sensor eine ausreichend hohe Dynamik besitzen.

Ein zweiter Sensor stellt fest, ob Telekommunikationsdaten zu empfangen sind. Es kann z.B. das Anrufsignal ausgewertet werden.

Ist an dem Personal Computer ein Modem angeschlossen, so kann hier eine Signalisierungsleitung zum Personal Computer überwacht werden. Der Datenfluß oder auch der Beginn des Verbindungsaufbaus kann durch Messung der Signalamplituden bzw. Frequenzen festgestellt werden. Die Messung kann galvanisch oder aber auch über induktive bzw. kapazitive Geber erfolgen. Bei der Signalisierungsleitung eines Modems besteht auch die Möglichkeit, diese direkt und digital zu überwachen.

Sollen mehrere Monitore oder auch mehrere Telekommunikationsleitungen überwacht werden, so ist eine entsprechende Anzahl von Sensoren vorzusehen.

Der Personal Computer selbst wird im Laststromkreis mit Hilfe eines Schaltelementes geschaltet. Das Schaltelement kann ein Halbleiterschalter oder auch ein Relais sein. Die Ansteuerung des Schaltelementes erfolgt durch die logische ODER-Verknüpfung aus den Sensorsignalen und dem Signal eines Zeitgebers.

Damit kann der Personal Computer mit Hilfe des Schaltetementes eingeschaltet werden, wenn Telekommunikationsdaten empfangen werden sollen, oder der Monitor eingeschaltet wurde. Der Zeitgeber wird zumindest durch den Sensor für Telekommunikationsdaten zurückgesetzt, so daß sein Zeitablauf erneut beginnt. Der Zeitgeber kann zusätzlich durch den Sensor zur Ermittlung des Einschaltzustandes des Monitors zurückgesetzt werden. Wichtig ist hierbei, daß der PC nach Empfang der letzten Daten noch eine über den Zeitgeber voreinstellbare Zeitdauer hinaus eingeschaltet und damit weiter empfangsbereit bleibt. Somit können Übertragungspausen überbrückt werden.

Als weitere Ausgestaltung kann ein zusätzlicher Laststromkreis zum Anschluß von Druckern und anderen Peripheriegeräten, die zur Telekommunikation nicht unmittelbar notwendig sind, vorgesehen werden. Dieser Laststromkreis wird durch ein weiteres Schaltelement geschaltet. Die Ansteuerung dieses Schaltelementes erfolgt durch das Signal zur Signalisierung des Einschaltzustandes des Monitors. Somit wird dieser Stromkreis beim Einschalten des Monitors, nicht aber bei der Telekommunikation eingeschaltet.

Weiterhin kann noch ein Speicherelement, z.B. als bistabiles Relais integriert werden, das auch nach dem Abschalten des PC nach Beendigung der Telekommunikation den Empfang von Daten signalisiert. Dieses Speicherelement kann durch das Einschalten des PC über den Monitorschalter wieder zurückgesetzt werden. Alternativ kann auch ein Zähler eingesetzt werden, der die Anzahl der Signale des Sensors zur Signalisierung ankommender Telekommunikationsdaten ermittelt und diese anzeigt.
Die in der Erfindung beschriebenen Logik- und Schaltfunktionen können kostengünstig mit Hilfe von Relais realisiert werden. Ebenso kann hier auch ein moderner Mikrocontroller eingesetzt werden.

In einer zweckmäßigen Weiterbildung der Erfindung ist ein zweiter Zeitgeber vorhanden, der durch das Abschalten des Signals zur Aktivierung des Netzteils getriggert wird.

Dieser zweite Zeitgeber gibt nach der Triggerung ein Signal zur Mitteilung der bevorstehenden Abschaltung an den Computer und verzögert darüber hinaus die Abschaltung des Netzteils um eine voreingestellte Zeit. Die hier beschriebene Funktion kann auch durch andere Schaltungsanordnungen realisiert werden. Wichtig ist hier die technische Funktion der Anordnung, daß eine bestimmte Zeit vor der Abschaltung des Netzteils dem PC die bevorstehende Abschaltung mitgeteilt wird. Dadurch hat der PC die Möglichkeit, einen definierten Systemabschluß herbeizuführen. So können noch offene Dateien geschlossen, Programme beendet und Daten aus einem flüchtigen Speicher in einen permanenten Speicher geschrieben werden.

Viele der hier beschriebenen Funktionen, insbesondere die Überwachungs- und Verzögerungsaufgaben werden bevorzugt durch Software-Lösungen realisiert.

Die Erfindung wird nachfolgend anhand einer schematischen Zeichnung in Blockdarstellung weiter erläutert.

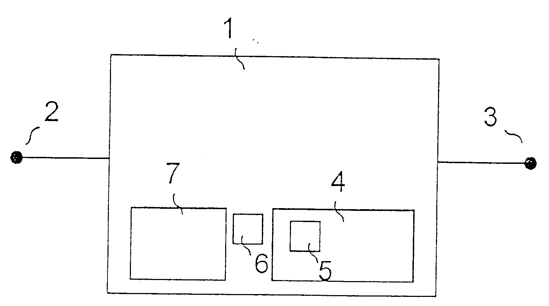

In der Abbildung ist eine Stromversorgung für einen PC mit einem Netzteil 1 dargestellt, das die Netzeingangsspannung an einen Eingang 2 in eine oder mehrere Ausgangsspannungen an einem Ausgang 3 umsetzt. Die Steuer- und Überwachungseinheit 4 dient als Sensor zur Überwachung des Datenverkehrs und erzeugt bei einsetzendem Datenverkehr ein Signal zur Aktivierung des Netzteils. Der Zeitgeber 5 sorgt dafür, daß auch nach dem Ende des Datenverkehrs das Signal zur Aktivierung des Netzteils für eine bestimmte Zeitdauer weiter bestehen bleibt, so daß Ein- und Ausschalten des PCs in kurzen Zeitintervallen unterbleibt. Eine zweite Überwachungseinheit 7 überwacht das Einschalten des Monitors und stellt mit Hilfe eines Stromsensors oder direkt über ein Steuersignal aus dem Monitor den Einschaltzustand des Monitors fest und aktiviert gegebenenfalls das Netzteil. Die Signale der Steuer- und Überwachungseinheit 4 des Zeitgebers 5 und der zweiten Überwachungseinheit 7 sind in einer einzigen ODER-Schaltung zusammengefaßt, so daß auf äußerst einfache Weise bei Vorliegen von mindestens einem der drei Signale das Netzteil eingeschaltet wird. Geht vor Ablauf des Zeitintervalls nach einem detektierten Datenverkehr ein neues Signal über die Telekommunikationsleitung ein, so wird der Zeitgeber 5 zurückgesetzt, so daß die Nachlaufzeit erneut von vorne beginnt.

Ein weiterer Zeitgeber 6 gibt vor dem Abschalten des Netzteils 1 ein Signal zur Ankündigung der bevorstehenden Abschaltung an den PC und verzögert die tatsächliche Abschaltung um einen bestimmten Zeitraum, so daß Vorkehrungen zum Abschalten getroffen werden können.

## Patentansprüche

1. Netzeinschaltvorrichtung für zumindest zeitweise am Versorgungsnetz betriebene Personalcomputer mit einer Anzeigeeinheit, insbesondere einem Monitor, wobei zumindest ein Steuerstromkreis zum Anschluß des Monitors vorgesehen ist,
einem Laststromkreis mit einem Schaltelement zum Anschluß des Personalcomputers,
mindestens einem Sensor zur Signalisierung ankommender Telekommunikationsdaten,
einer Ansteuerungseinrichtung für das Schaltelement des Laststromkreises zum Anschluß des Personalcomputers,
wobei diese Ansteuerungseinrichtung von einem ODER-Gatter gebildet ist, dem mindestens das Signal des Sensors zur Signalisierung ankommender Telekommunikationsdaten zugeführt ist und
einem Zeitgeber zur Verzögerung einer Abschaltung,
dadurch **gekennzeichnet**,
daß ein Stromsensor zur Signalisierung des Einschaltzustandes des Monitors vorgesehen ist,
daß dem ODER-Gatter das Signal des Stromsensors zur Signalisierung des Einschaltzustandes des Monitors zugeführt ist und
daß dem ODER-Gatter das Signal des Zeitgebers während einer voreingestellten Zeitdauer zugeführt ist, und
daß eine Rückstelleinrichtung für den Zeitgeber vorgesehen ist.

2. Netzeinschaltvorrichtung nach Anspruch 1,
dadurch **gekennzeichnet,**
daß ein weiteres Schaltelement zur Schaltung eines weiteren Laststromkreises für die Ansteuerung eines Druckers und anderer Peripheriegeräte vorgesehen ist, und daß das weitere Schaltelement durch das Signal zur Signalisierung des Einschaltzustandes des Monitors steuerbar ist.

3. Netzeinschaltvorrichtung nach Anspruch 1 oder 2,
dadurch **gekennzeichnet,**
daß ein Speicherelement mit einer Anzeigeeinrichtung vorhanden ist,
und daß das Speicherelement durch das Signal des Sensors zur Signalisierung ankommender Telekommunikationsdaten auf "1" gesetzt und durch das Signal vom Stromsensor zur Signalisierung des Einschaltzustandes des Monitors auf "0" gesetzt wird.

4. Netzeinschaltvorrichtung nach einem der vorhergehenden Ansprüche,
dadurch **gekennzeichnet**,
daß ein zweiter Zeitgeber vorgesehen ist, der durch das Abschalten des Signals zur Ansteuerungseinrichtung getriggert ist, und der erstens das Signal zur Zuführung an die Ansteuerungseinrichtung erzeugt, um eine fest vorgebbare Zeitdauer zu verlängern, und zweitens ein Signal zur Mitteilung der bevorstehenden Abschaltung an den Personal Computer, insbesondere an dessen Rechnereinheit, weiterleitet.

5. Vorrichtung nach einem der vorhergehenden Ansprüche,
dadurch **gekennzeichnet**,
daß eine Einrichtung zur Programmierung der Zeitdauer, sowie des Schaltverhaltens mit der Möglichkeit der Anfrage des Zustandes des ersten Zeitgebers und des zweiten Zeitgebers zur Verlängerung der Einschaltdauer vorhanden ist.
